# FASCICULE DE BREVET EUROPEEN

(11) **EP 3 309 020 B1**
(45) Date de publication et mention de la délivrance du brevet: **07.08.2019**
(21) Numéro de dépôt: 17306358.7
(22) Date de dépôt: 10.10.2017
(51) Int. Cl.: B60S 3/04

(54) **ENSEMBLE DE LAVAGE POUR VEHICULE A MOTEUR**
REINIGUNGSANORDNUNG FÜR MOTORFAHRZEUG
WASHING KIT FOR MOTOR VEHICLE

(30) Priorité: 12.10.2016 FR 1659864
(43) Date de publication de la demande: 18.04.2018
(73) Titulaire: L2O, 67370 Truchtersheim (FR)
(72) Inventeur: LEFEBVRE, Thierry, 67370 TRUCHTERSHEIM (FR)
(74) Mandataire: CAPRI

(56) Documents cités:
- EP-A1- 2 154 038
- FR-A1- 2 937 933
- US-A- 5 033 489
- US-A1- 2003 213 502

## Description

La présente invention concerne un ensemble de lavage, en particulier destiné au nettoyage de véhicules à moteur, disposé dans un garage souterrain.

Les aires de lavage, notamment pour automobiles, sont bien connues. Ce sont généralement des installations extérieures non démontables qui nécessitent un aménagement complexe de l'environnement dans lequel ils sont réalisés, et qui une fois installées, sont destinées à y rester en permanence. Ces aires de lavage ne peuvent pas être installées en sous-sol, notamment dans des parkings ou garages souterrains, principalement pour des raisons de place et de poids. Dans ces garages souterrains, il existe des solutions de lavage à sec, sans eau, qui sont toutefois très coûteuses du fait du temps passé et du coût de la main d'oeuvre, un lavage à sec étant beaucoup plus cher que dans une station de lavage avec eau.

Le document FR 2 937 933 décrit un exemple d'un ensemble de lavage selon l'art antérieur.

La présente invention a pour but de fournir un ensemble de lavage qui ne reproduit pas les inconvénients susmentionnés, et qui en particulier peut être disposé en sous-sol, dans un garage ou parking souterrain.

La présente invention a également pour but de fournir un tel ensemble de lavage qui s'adapte n'importe où, et qui ne nécessite pas un aménagement complexe de l'environnement dans lequel il est installé.

La présente invention a également pour but de fournir un tel ensemble de lavage mobile qui ne présente aucun risque pour l'environnement.

La présente invention a encore pour but de fournir un tel ensemble de lavage mobile qui est simple et peu coûteux à fabriquer, monter, démonter et utiliser.

La présente invention a donc pour objet un ensemble de lavage pour véhicule à moteur, ledit ensemble étant disposé dans un garage souterrain, ledit ensemble comprenant une aire de lavage et une zone technique séparée de ladite aire de lavage, ladite aire de lavage comportant un plancher surélevé sensiblement rectangulaire, ledit plancher comportant deux côtés longs sensiblement parallèles et deux côtés courts sensiblement parallèles, et au moins un bac de récupération des eaux usées disposé sous ledit plancher surélevé, ladite zone technique comportant des moyens de nettoyage et/ou de filtration desdites eaux usées reliés à au moins un bac de stockage desdites eaux usées nettoyées et/ou filtrées, et des moyens de distribution d'eau reliés d'une part audit bac de stockage, pour le lavage, et d'autre part à une source d'eau externe, pour le rinçage final, ladite aire de lavage comportant:
- une paroi verticale latérale disposée le long de chaque côté long dudit plancher, une paroi verticale de fond disposée le long d'un côté court dudit plancher et une paroi avant, comportant une porte d'accès pour le véhicule à moteur, disposée le long de l'autre côté court dudit plancher, lesdites parois latérales, de fond et avant étant reliées audit plancher et aux parois adjacentes de manière étanche, formant, en utilisation, une enceinte étanche autour dudit plancher, et
- un système de ventilation, de préférence à double flux, pour évacuer l'humidité générée lors d'un lavage.

Avantageusement, l'une parmi lesdites parois latérales et de fond comporte une porte permettant d'accéder à ladite zone technique.

Avantageusement, lesdits moyens de nettoyage et/ou de filtration comportent des moyens pour séparer les boues desdites eaux usées.

Avantageusement, lesdits moyens de nettoyage et/ou de filtration comportent des moyens de filtration, tels que des filtres, adaptés à filtrer les particules supérieures à 50 µm de diamètre, avantageusement supérieures à 20 µm de diamètre, de préférence supérieures à 5 µm de diamètre.

Avantageusement, lesdits moyens de distribution d'eau comportent un nettoyeur haute pression, de préférence disposé dans ladite zone technique.

Avantageusement, ladite zone technique comporte une source d'énergie, tel qu'un groupe électrogène et/ou un réseau électrique.

Avantageusement, ledit système de ventilation est relié à la ventilation du garage souterrain.

Avantageusement, ledit système de ventilation comporte des moyens de chauffage.

Avantageusement, ledit système de ventilation comporte des tuyaux et/ou des bouches d'aération.

Avantageusement, ladite zone technique comporte en outre des moyens de nettoyage intérieurs, tel qu'un aspirateur.

Ces caractéristiques et avantages et d'autres de la présente invention apparaîtront plus clairement au cours de la description détaillée suivante de celle-ci, faite en référence aux dessins joints, donnés à titre d'exemples non limitatifs, et sur lesquels
- la figure 1 est une vue schématique en perspective d'un ensemble de lavage selon un mode de réalisation de la présente invention, vue de devant,
- la figure 2 est une vue similaire à celle de la figure 1, vue de derrière,

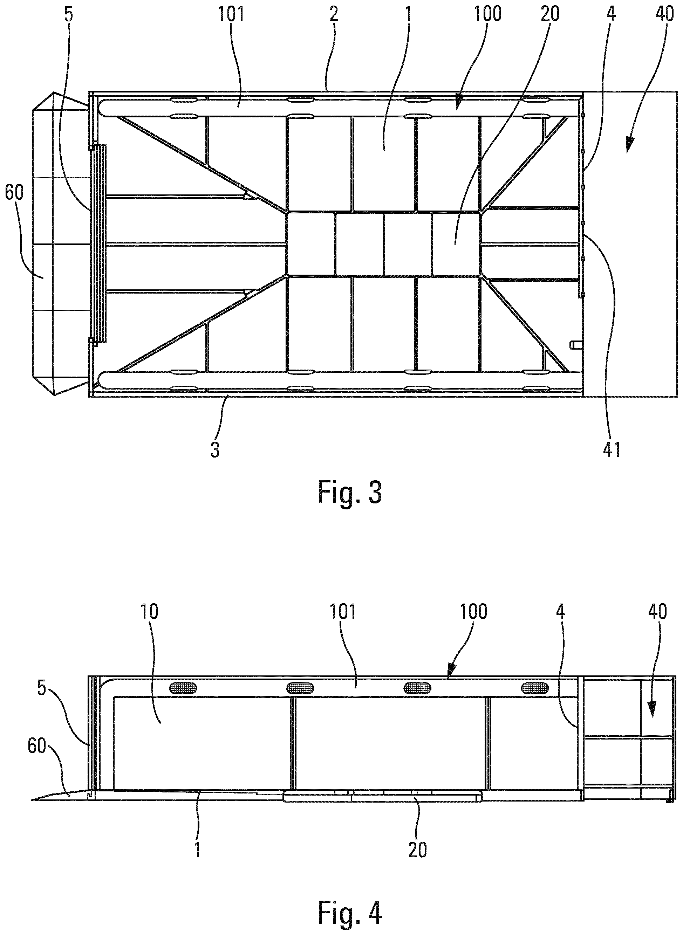

- la figure 3 est une vue de dessus de l'ensemble de lavage de la figure 1, et
- la figure 4 est une vue de côté de l'intérieur de l'ensemble de lavage de la figure 1.

L'ensemble de lavage est avantageusement une structure métallique démontable et transportable. Il peut être conçu pour être posé sur les radiers des parkings qui supportent une charge de 250 kg au mètre carré. Il peut être splité ou collé au sol.

L'ensemble de lavage est composé de deux éléments: une aire 10 de lavage et nettoyage automobile et une zone technique 40, séparée de ladite aire de lavage 10.

L'aire de lavage 10 comporte un plancher surélevé 1 sensiblement rectangulaire, ledit plancher comportant deux côtés longs sensiblement parallèles et deux côtés courts sensiblement parallèles. L'aire de lavage 10 comporte aussi au moins un bac de récupération 20 des eaux usées disposé sous ledit plancher surélevé 1.

Dans l'exemple des figures, le plancher 1 a un plan en forme de "diamant inversé" avec une récupération centrale des eaux, mais il pourrait être réalisé différemment, par exemple dans l'esprit douche à l'italienne ou composé de rigoles longitudinales et ou transversales.

La zone technique 40 comporte des moyens de nettoyage et/ou de filtration des eaux usées reliés à un séparateur d'hydrocarbures - débourbeur, et à au moins un bac de stockage desdites eaux usées nettoyées et/ou filtrées. Une filtration ultra fine peut être prévue permettant de réutiliser les eaux recyclées ainsi que les eaux pluviales chaque fois que cela est possible. La zone technique 40 comporte aussi des moyens de distribution d'eau, notamment un nettoyeur ou pompe haute pression, reliés d'une part audit bac de stockage, pour le prélavage. Les moyens de distribution d'eau sont également reliés à une source d'eau externe, pour le rinçage final. La zone technique peut en outre comporter une source d'énergie, tel qu'un groupe électrogène et/ou un réseau électrique, des moyens de nettoyage intérieurs, tel qu'un aspirateur, ainsi que du rangement et du stockage divers.

Selon un premier aspect de l'invention, l'aire de lavage, en utilisation, est entièrement close. Pour ce faire, elle comporte une paroi verticale latérale 2, 3 disposée le long de chaque côté long dudit plancher 1, une paroi verticale de fond 4 disposée le long d'un côté court dudit plancher 1 et une paroi avant 5, comportant une porte d'accès pour le véhicule à moteur, disposée le long de l'autre côté court dudit plancher 1. Lesdites parois latérales, de fond et avant sont reliées audit plancher 1 et aux parois adjacentes de manière étanche, formant ainsi, en position d'utilisation, une enceinte étanche autour dudit plancher 1.

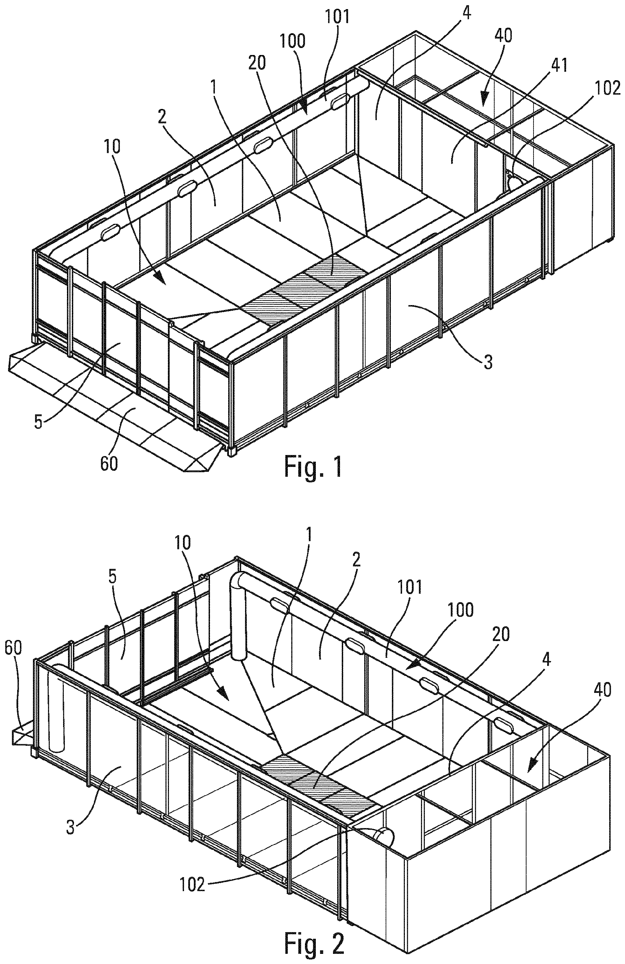

Selon un second aspect de l'invention, l'ensemble de lavage comporte un système de ventilation 100 pour évacuer l'humidité générée lors d'un lavage. Ce système de ventilation comporte avantageusement plusieurs bouches de ventilation, par exemple sur les parois de fond et ou avant, comme visible en particulier sur la figure 1. Avantageusement, ledit système de ventilation 100 est relié à la ventilation du garage souterrain. Eventuellement, ledit système de ventilation 100 peut comporter des moyens de chauffage. De préférence, le système de ventilation 100 est à double flux. L'air humide de l'aire de lavage est aspiré, asséché et renvoyé sur l'aire de lavage et/ou sur la zone d'entrée de l'aire afin d'assécher le sol qui pourrait être humide du fait de la sortie de véhicules mouillés après leur lavage. Ce système de ventilation 100 peut comporter des tuyaux 101 et/ou des bouches d'aération 102. Un système de ventilation 100 permet d'éviter de créer une zone humide dans un parking souterrain qui serait préjudiciable à la santé de l'opérateur qui nettoie les voitures, aux matériels qui rouilleraient et aux équipements d'éclairage, de signalisation et de sécurité du parking.

C'est cette combinaison d'une enceinte démontable et étanche et d'une ventilation qui permet d'installer ledit ensemble de lavage en sous-sol, dans un garage souterrain, sans risquer d'inonder ledit garage ou de générer des dégradations liées à l'humidité.

L'une parmi les parois latérales 2,3 et la paroi de fond 4 comporte avantageusement une porte 41 permettant d'accéder à ladite zone technique 40. Dans l'exemple représenté sur les figures, la zone technique 40 est disposée derrière la paroi de fond 4, mais on pourrait l'imaginer à gauche de la paroi latérale de gauche 2, ou à droite de la paroi latérale de droite 3 (vue à partir de la paroi avant 5).

La porte d'accès à l'aire de lavage est avantageusement formée seulement sur une partie de la largeur de la paroi frontale 5, ce qui permet par exemple de prévoir une porte coulissante à tiroirs, comme représenté sur les figures.

Le fonctionnement de l'invention sera décrit ci-après. Il est entendu que cette description correspond à un exemple de réalisation de l'invention, et n'est pas limitatif.

Une voiture pénètre sur le plancher 1 de l'aire de lavage via une rampe 60 disposée devant ladite paroi frontale formant porte 5. La voiture peut rentrer en marche avant et sortir en marche arrière, ou l'inverse. Si la zone technique 40 est disposée le long d'une paroi latérale 2,3, on pourrait prévoir une porte de sortie dans la paroi de fond, par exemple similaire à la porte d'accès dans la paroi frontale 5, auquel cas la voiture pourrait rentrer en marche avant et sortir en marche avant.

Une fois la porte d'accès de la paroi avant 5 et celle 41 de la zone technique 40 refermées, l'aire de lavage 10 est entièrement close afin d'empêcher tout écoulement d'eau sur le parking.

La voiture est lavée, de préférence avec une lance haute pression d'un nettoyeur ou pompe haute pression.

Les eaux sales s'écoulent dans le bac de récupération 20 qui décante les premières boues et gravillons. Un flotteur déclenché avec la montée de l'eau dans ce bac de récupération 20 met en marche une pompe à membrane qui peut aspirer des liquides chargés en hydrocarbures ainsi que des gravillons.

Les eaux pompées sont directement dirigées vers un séparateur d'hydrocarbure-débourbeur. Au sortir de ce séparateur-débourbeur, les eaux "propres" quoique chargées en MES (matières en suspension) s'écoulent par gravité dans une cuve de stockage.

Au sortir de cette cuve, les eaux sont mises en pression à l'aide d'un surpresseur, et envoyées dans un filtre contenant différents composants (sable, zéolithe, billes de verre, etc.) qui filtre les particules supérieures à 50 µm de diamètre, avantageusement supérieures à 20 µm de diamètre, de préférence supérieures à 5 µm de diamètre, avant d'être envoyée à la pompe haute pression.

La totalité de l'eau récupérée et filtrée ne peut être utilisée. En effet en phase finale de rinçage, quoique que l'on fasse, l'eau reste chargée en MES et laisse des traces au séchage. L'eau recyclée est donc utilisée pour le premier lavage de la voiture et le rinçage après le shampouinage, mais en phase finale il est souhaitable d'utiliser soit de l'eau du réseau, soit de l'eau de pluie, soit de l'eau déminéralisée soit de l'eau déminéralisée et osmosée.

Tous les soirs, un contre lavage du filtre peut être réalisé avec de l'eau propre du réseau et les eaux sales sont renvoyées dans le séparateur-débourbeur d'hydrocarbure.

Après le lavage de la voiture, le plancher 1 de l'aire de lavage 10 est quasiment sec car toute l'eau tombée au sol est drainée automatiquement et rapidement vers le bac récupérateur 20. Ceci permet d'utiliser l'aire de lavage comme aire de nettoyage intérieur de la voiture, de passer l'aspirateur et de faire des petits travaux de lustrage, de réparation et d'entretien.

Le séparateur-débourbeur d'hydrocarbure fait de préférence l'objet d'un curage et nettoyage périodiquement et le bac récupérateur fait de préférence l'objet d'un nettoyage journalier. Des bidons spéciaux pour y déposer les boues enlevées peuvent être prévus, par exemple dans la zone technique.

Il est à noter que les exemples représentés ne sont donnés qu'à titre d'exemple. Diverses modifications sont possibles pour l'homme du métier sans sortir du cadre de la présente invention telle que définie par les revendications annexées.

## Revendications

1. Ensemble de lavage pour véhicule à moteur, ledit ensemble étant disposé dans un garage souterrain, ledit ensemble comprenant une aire de lavage (10) et une zone technique (40) séparée de ladite aire de lavage (10), ladite aire de lavage (10) comportant un plancher surélevé (1) sensiblement rectangulaire, ledit plancher comportant deux côtés longs sensiblement parallèles et deux côtés courts sensiblement parallèles, et au moins un bac de récupération (20) des eaux usées disposé sous ledit plancher surélevé (1), ladite zone technique (40) comportant des moyens de nettoyage et/ou de filtration desdites eaux usées reliés à au moins un bac de stockage desdites eaux usées nettoyées et/ou filtrées, et des moyens de distribution d'eau reliés d'une part audit bac de stockage, pour le lavage, et d'autre part à une source d'eau externe, pour le rinçage final, ladite aire de lavage (10) comportant:
- une paroi verticale latérale (2, 3) disposée le long de chaque côté long dudit plancher (1), une paroi verticale de fond (4) disposée le long d'un côté court dudit plancher (1) et une paroi avant (5), comportant une porte d'accès pour le véhicule à moteur, disposée le long de l'autre côté court dudit plancher (1), lesdites parois latérales (2, 3), de fond (4) et avant (5) étant reliées audit plancher (1) et aux parois adjacentes de manière étanche, formant, en utilisation, une enceinte étanche autour dudit plancher (1), et
- un système de ventilation (100), de préférence à double flux, pour évacuer l'humidité générée lors d'un lavage.

2. Ensemble selon la revendication 1, dans lequel l'une parmi lesdites parois latérales (2,3) et de fond (4) comporte une porte (41) permettant d'accéder à ladite zone technique (40).

3. Ensemble selon la revendication 1 ou 2, dans lequel lesdits moyens de nettoyage et/ou de filtration comportent des moyens pour séparer les boues desdites eaux usées.

4. Ensemble selon la revendication 3, dans lequel lesdits moyens de nettoyage et/ou de filtration comportent des moyens de filtration, tels que des filtres, adaptés à filtrer les particules supérieures à 50 µm de diamètre, avantageusement supérieures à 20 µm de diamètre, de préférence supérieures à 5 µm de diamètre.

5. Ensemble selon l'une quelconque des revendications précédentes, dans lequel lesdits moyens de distribution d'eau comportent un nettoyeur haute pression, de préférence disposé dans ladite zone technique (40).

6. Ensemble selon l'une quelconque des revendications précédentes, dans lequel ladite zone technique (40) comporte une source d'énergie, tel qu'un groupe électrogène et/ou un réseau électrique.

7. Ensemble selon l'une quelconque des revendications précédentes, dans lequel ledit système de ventilation (100) est relié à la ventilation du garage souterrain.

8. Ensemble selon l'une quelconque des revendications précédentes, dans lequel ledit système de ventilation (100) comporte des moyens de chauffage.

9. Ensemble selon l'une quelconque des revendications précédentes, dans lequel ledit système de ventilation (100) comporte des tuyaux (101) et/ou des bouches d'aération (102).

10. Ensemble selon l'une quelconque des revendications précédentes, dans lequel ladite zone technique (40) comporte en outre des moyens de nettoyage intérieurs, tel qu'un aspirateur.

## Patentansprüche

1. Waschaufbau für ein Motorfahrzeug, wobei der Aufbau in einer Tiefgarage angeordnet ist, wobei der Aufbau eine Waschfläche (10) und einen Technikbereich (40) umfasst, der von der Waschfläche (10) getrennt ist, wobei die Waschfläche (10) einen im Wesentlichen rechteckigen, höher gelegenen Boden (1), wobei der Boden zwei im Wesentlichen parallele lange Seiten und zwei im Wesentlichen parallele kurze Seiten umfasst, sowie mindestens einen Rückgewinnungsbehälter (20) für Abwässer umfasst, der unter dem erhöhten Boden (1) angeordnet ist, wobei der Technikbereich (40) Reinigungs- und/oder Filtrationsmittel für die Abwässer, die mit mindestens einem Lagerbehälter für die gereinigten und/oder gefilterten Abwässer verbunden sind, sowie Wasserausgabemittel umfasst, die einerseits mit dem Lagerbehälter zum Waschen und andererseits mit einer externen Wasserquelle für das abschließende Spülen verbunden sind, wobei die Waschfläche (10) umfasst:
- eine vertikale Seitenwand (2, 3), die entlang jeder langen Seite des Bodens (1) angeordnet ist, eine vertikale Rückwand (4), die entlang einer kurzen Seite des Bodens (1) angeordnet ist, und eine Vorderwand (5), umfassend eine Zugangstüre für das Motorfahrzeug, angeordnet entlang der anderen kurzen Seite des Bodens (1), wobei die Seitenwände (2, 3), die Rückwand (4) und die Vorderwand (5) mit dem Boden (1) und den benachbarten Wänden dichtend verbunden sind, so dass sie im Gebrauch eine dichte Einfassung um den Boden (1) bilden, und
- ein vorzugsweise doppelströmiges Entlüftungssystem (100), um die während eines Waschens erzeugte Feuchtigkeit abzuführen.

2. Aufbau nach Anspruch 1, wobei eine von den Seitenwänden (2, 3) und der Rückwand (4) eine Tür (41) umfasst, die es ermöglicht, den Technikbereich (40) zu betreten.

3. Aufbau nach Anspruch 1 oder 2, wobei die Reinigungs- und/oder Filtrationsmittel Mittel zum Trennen von Schmutz von den Abwässern umfassen.

4. Aufbau nach Anspruch 3, wobei die Reinigungs- und/oder Filtrationsmittel Mittel zur Filtration, wie Filter, umfassen, die dazu geeignet sind, Teilchen mit einem Durchmesser von mehr als 50 µm, vorteilhafterweise mehr als 20 µm, vorzugsweise mehr als 5 µm zu trennen.

5. Aufbau nach einem der vorhergehenden Ansprüche, wobei die Wasserausgabemittel einen Hochdruckreiniger umfassen, der vorzugsweise in dem Technikbereich (40) angeordnet ist.

6. Aufbau nach einem der vorhergehenden Ansprüche, wobei der Technikbereich (40) eine Energiequelle, wie eine elektromotorische Gruppe und/oder ein Stromnetz, umfasst.

7. Aufbau nach einem der vorhergehenden Ansprüche, wobei das Entlüftungssystem (100) mit der Entlüftung der Tiefgarage verbunden ist.

8. Aufbau nach einem der vorhergehenden Ansprüche, wobei das Entlüftungssystem (100) Heizmittel umfasst.

9. Aufbau nach einem der vorhergehenden Ansprüche, wobei das Entlüftungssystem (100) Belüftungsrohre (101) und/oder Belüftungsklappen (102) umfasst.

10. Aufbau nach einem der vorhergehenden Ansprüche, wobei der Technikbereich (40) des Weiteren Innenreinigungsmittel umfasst, wie einen Staubsauger.

## Claims

1. A wash assembly for a motor vehicle, said assembly being disposed in an underground garage, said assembly comprising a wash area (10) and a technical zone (40) separated from said wash area (10), said wash area (10) including a substantially rectangular raised floor (1), said floor including two substantially parallel long sides and two substantially parallel short sides, and at least one wastewater recovery tank (20) disposed under said raised floor (1), said technical zone (40) including wastewater cleaning and/or filtering means connected to at least one tank for storing said wastewater cleaned and/or filtered, and water distribution means connected, on the one hand, with said storage tank, for the washing and, on the other hand, with an external water source, for the final rinse, said wash area (10) including:
- a vertical side wall (2, 3) disposed along each long side of said floor (1), a vertical bottom wall (4) disposed along a short side of said floor (1) and a front wall (5), including an access door for the motor vehicle, disposed along the other short side of said floor (1), said side (2, 3), bottom (4) and front (5) walls being connected to said floor (1) and to the walls adjacent in a sealed manner, forming, in use, an enclosure sealed around said floor (1), and
- a preferably double-flow ventilation system (100) to discharge humidity generated during washing.

2. The assembly according to claim 1, wherein one of said side (2, 3) and bottom (4) walls includes a door (41) allowing access to said technical zone (40).

3. The assembly according to claim 1 or 2, wherein said cleaning and/or filtering means include means for separating the sludge from said wastewater.

4. The assembly according to claim 3, wherein said cleaning and/or filtering means include filtering means, such as filters capable of filtering particles larger than 50 µm in diameter, advantageously larger than 20 µm in diameter, preferably larger than 5 µm in diameter.

5. The assembly according to any one of the preceding claims, wherein said water distribution means include a highpressure cleaner, preferably disposed in said technical zone (40) .

6. The assembly according to any one of the preceding claims, wherein said technical zone (40) includes a source of energy, such as a generator set and/or an electric network.

7. The assembly according to any one of the preceding claims, wherein said ventilation system (100) is connected to the ventilation of the underground garage.

8. The assembly according to any one of the preceding claims, wherein said ventilation system (100) includes heating means.

9. The assembly according to any one of the preceding claims, wherein said ventilation system (100) includes pipes (101) and/or air vents (102).

10. The assembly according to any one of the preceding claims, wherein said technical zone (40) further includes interior cleaning means, such as a vacuum cleaner.
